(19) Europäisches Patentamt
European Patent Office
Office européen des brevets

(11) **EP 1 560 388 B1**

(12) **EUROPEAN PATENT SPECIFICATION**

(45) Date of publication and mention
of the grant of the patent:
**21.03.2012   Bulletin 2012/12**

(51) Int Cl.:
***H04L 25/02*** (2006.01)

(21) Application number: **02782643.7**

(22) Date of filing: **18.11.2002**

(86) International application number:
**PCT/CN2002/000824**

(87) International publication number:
**WO 2004/014029 (12.02.2004 Gazette 2004/07)**

(54) **A method of channel estimation in wideband CDMA communication**

Verfahren zur Kanalschätzung bei breitbandiger CDMA-Kommunikation

Procédé d'estimation de canal dans un système de communication AMCR à large bande

(84) Designated Contracting States:
**AT BE BG CH CY CZ DE DK EE ES FI FR GB GR IE IT LI LU MC NL PT SE SK TR**

(30) Priority: **06.08.2002   CN 02136444**

(43) Date of publication of application:
**03.08.2005   Bulletin 2005/31**

(73) Proprietor: **ZTE Corporation Shenzhen, Guangdong 518057 (CN)**

(72) Inventors:
• **XIONG, Jianqiu Shenzhen, Guangdong 518057 (CN)**
• **ZHANG, Junfeng Shenzhen, Guangdong 518057 (CN)**
• **TIAN, Dan Shenzhen, Guangdong 518057 (CN)**

(74) Representative: **Hutchinson, Glenn Stanley et al Harrison Goddard Foote Fountain Precinct Balm Green Sheffield S1 2JA (GB)**

(56) References cited:
**EP-A- 1 089 451        WO-A-00/36760
WO-A-99/31835        CN-A- 1 288 316**

**Description**

FIELD OF THE INVENTION

The invention generally relates to communication systems, and in particular, a method of channel estimation in a wideband code division multiple access communication system.

BACKGROUND OF THE INVENTION

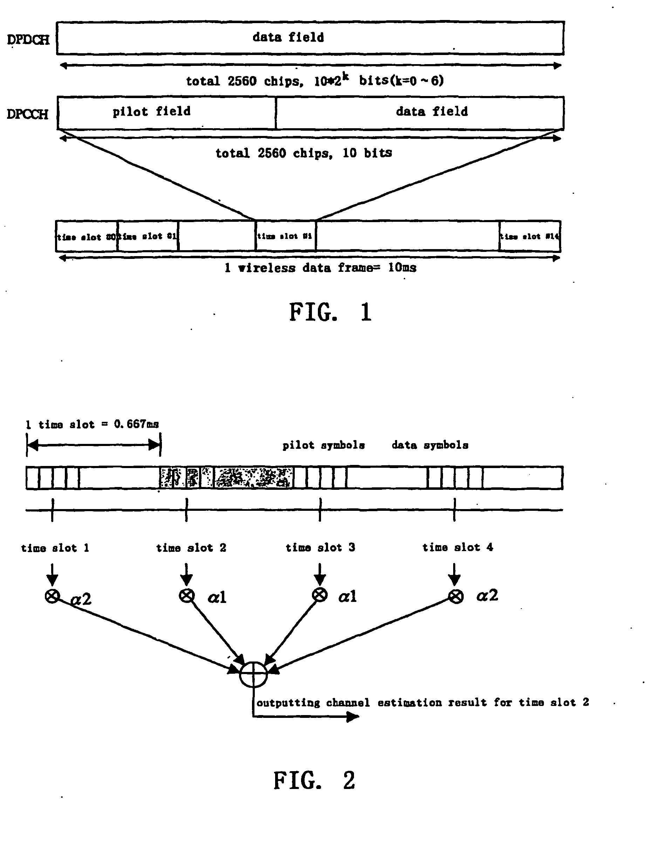

With the development of mobile communication technology, the requirement for the quality and types of services provided by mobile communication is higher and higher. It satisfies people's requirement to propose and develop a third generation mobile communication technique and so attracts people's attention. Wideband code division multiple access (hereinafter referred to as "Wideband CDMA") is a project of Radio Transmission Technology (RTT) provided by 3rd Generation Partnership Project (3GPP), which can provide not only high quality of voice service but also multimedia service similar to that in fixed network. For improving the quality of uplink channel, in a Wideband CDMA system, some pilot symbols (as shown in Fig. 1) are added to uplink dedicated physical control channel (DPCCH) to implement channel estimation for coherent detection. The emission of pilot symbols is not continuous. According to different format of time slot, the number of pilot symbols in each time slot range is from 3 to 8. Therefore, It is very important for improving the receiving performance of a receiver in a high speed moving environment what approach is used to estimate accurately the channel characteristic corresponding with pilot symbol segments and data symbol segments within time slots simultaneously.

At present, the methods of channel estimation in the art include single time slot averaging, simplified Kalman-based tracking filtering, weighted multi-slot averaging (WMSA), iterative channel estimation (ICE) and multi-slot averaged linear interpolation (MALI) methods.

The channel estimation method of single time slot averaging could not filter noise effectively due to less pilot symbols, and, therefore, the performance is worse in either low-speed or high-speed moving environment. The channel estimation method of Simplified Kalman-based tracking filtering improves the former, and its performance is better in low-speed moving environment but still remains poor in high-speed moving environment.

The channel estimation method of weighted multi-slot averaging (WMSA) has the following estimation process: (1) getting a channel estimation value of each time slot by the channel estimation method of single time slot averaging; (2) combining weighted channel estimation values of a plurality of time slots to get a channel estimation value of the current time slot. The noise impact can be filtered effectively due to calculating a weighted average value of multiple time slots, so that better performance on channel estimation can be reached under the circumstance of signal slow fading. However, as the channel is deteriorating, such as expediting the moving speed, the performance of the method becomes worse since estimated values can not exactly reflect channel characteristic in different time intervals within time slot.

The idea of iterative channel estimation is as follows: first getting a channel estimation value of the current time slot for each pathway by weighted multi-slot averaging, and compensating dedicated physical control channel (DPCCH) and combining thereof; making hard-decision on the combined result; taking out the decided symbols of data segments as virtual pilot symbols and re-making channel estimation by feedback. This process can be iterated more than once to increase precision. Since the method is based on weighted multi-slot averaging, as the channel deteriorating, the performance of weighted multi-slot averaging becomes worse and the false decision rate in hard-decision increases, which results in the descent of the performance of the method and the increase of the processing time delay.

The idea of multi-slot averaged linear interpolation is as follows: first getting a channel estimation value of each time slot by weighted multi-slot averaging, and then making linear interpolation by utilizing channel estimation values of the current time slot and the next time slot to obtain channel estimation value corresponding to each symbol within the current time slot. Because linear interpolation is used to get channel estimation values corresponding to each symbol within a time slot, the performance of the method is improved compared with that of weighted multi-slot averaging when channel deteriorates. Since still based on weighted multi-slot averaging it can not accurately estimate channel characteristic of different time intervals within time slot, the channel estimate values obtained by symbol interpolation can not be precise and the performance is still not perfect.

The document EP1089451 relates to a method of estimating channel characteristics of different segments within a single timeslot.

SUMMARY OF THE INVENTION

The object of the present invention is to provide a channel estimation method for uplink channel of wideband CDMA system based on estimation values on segments within time slot, which can overcome the various disadvantages in the art while channel deteriorating as mentioned above, and, therefore, improve receiving performance of a communication system in a moving environment.

The invention is as described in the independent claim.

BRIEF DESCRIPTION OF THE DRAWINGS

Fig. 1 is a frame structure diagram of uplink dedicated physical channel (DPCH) in Wideband CDMA system;
Fig. 2 is a diagram of a channel estimation algorithm of weighted multi-slot averaging in the art;
Fig. 3 is a block diagram of a channel estimation method of the present invention;
Fig. 4 is a flow diagram of a channel estimation method of the present invention;
Fig. 5 is a flow diagram of computing channel estimation value of segments of pilot symbols within time slots according to Fig. 4;
Fig. 6 is a flow diagram of computing channel estimation value of segments of data symbols within time slots according to Fig. 4; and
Fig. 7 is an embodiment of channel estimation algorithm of the present invention.

DESCRIPTION OF THE PREFERRED EMBODIMENT(S)

Fig. 2 is a diagram of the channel estimation algorithm of weighted multi-slot averaging in the art. In the embodiment, the weighted multi-slot averaging method is used to compute a channel estimation value of time slot 2. The detail process is first getting channel estimation values of time slots 1, 2, 3 and 4, respectively, by computing a arithmetical average on channel estimation values for each of pilot symbols within each time slot, and then computing a weighted average among adjacent four time slots on corresponding weight values for each time slot as shown in the figure to get a final channel estimation value for time slot 2, i.e.

$$\hat{E}_2 = (\alpha_2 E_1 + \alpha_1 E_2 + \alpha_1 E_3 + \alpha_2 E_4)/(2\alpha_1 + 2\alpha_2)$$

In the equation, $\hat{E}_2$ is the final channel estimation value for time slot 2, and $E_i, \alpha_i$ are the channel estimation value after calculating arithmetical average within each time slot and the corresponding weight value of each time slot for weighted multi-slot averaging, respectively. It can be seen that the method can achieve better channel estimation performance under the situation of signal slow fading, since the weighted average is calculated among a plurality of time slots. However, with the deterioration of channel, e.g. expediting moving speed, the performance of the method becomes worse since estimated values can not exactly reflect channel characteristic over different time intervals of time slots.

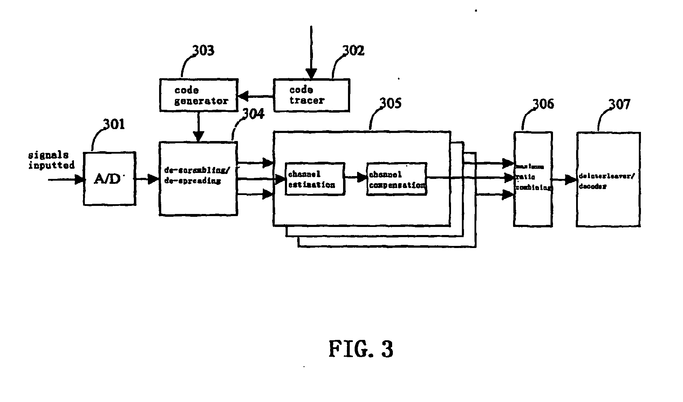

In Fig. 3, AD converter 301 transforms analog signals inputted into a receiver into digital signals. The digital signals are inputted into de-scrambling and de-spreading module 304 where the signals inputted are de-scrambled and de-spread by using scrambling code generated by code tracer 302 and code generator 303. Each of multi-path signals de-scrambled and de-spread are inputted into corresponding channel estimation and compensation module 305 where it computes channel estimation values of pilot segment and data segment for each time slot, respectively, and compensates dedicated data channels. Each of pathway signals compensated is outputted into maximum ratio combining module 306 to undergo maximum ratio combining. Finally the signals combined are inputted into deinterleaver/decoder 307 to be deinterleaved and decoded, getting original signals transmitted by a transmitter. The channel estimation method based on estimating on segments within time slot according to the present invention, is channel estimation and compensation module 305.

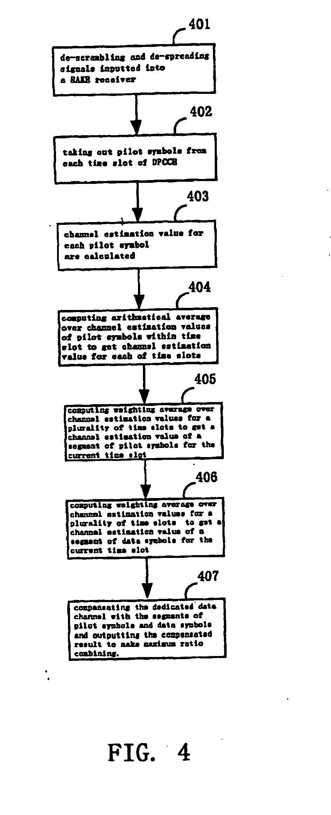

Fig. 4 is a flow diagram of uplink channel estimation method according to the present invention, and the process begins with step 401, and ends at step 407.

In step 401, wideband spread spectrum signals inputted into a RAKE receiver are de-scrambled and de-spread.

In step 402 sequentially, pilot symbols are taken out from each of time slots of dedicated physical control channel (DPCCH) according to a predetermined time slot format.

In step 403 sequentially, each of pilot symbols taken out is correlated with a known pilot symbol to get channel estimation values for each pilot symbol.

In step 404 sequentially, an arithmetical average is computed over channel estimation values of all pilot symbols within each time slot to get channel estimate value for each time slot.

In step 405 sequentially, a weighting average is computed over channel estimation values for a plurality of time slots before and after a current time slot, to get a channel estimation value of a segment of pilot symbols for the current time slot.

In step 406 sequentially, a weighting average is computed over channel estimation values for a plurality of time slots before and after the current time slot, to get a channel estimation value of a segment of data symbols for the current time slot.

In step 407 sequentially, the dedicated data channel of the current time slot is compensated with channel estimation values of the segments of pilot symbols and data symbols, and the compensated result is output to make maximum ratio combining.

It can be seen from the above steps that the method of the present invention can effectively utilize the symmetry principle and accurately estimate the corresponding channel characteristic for segment of pilot symbols and segment of data symbols within a time slot. Therefore, the method really avoids such disadvantages that the algorithm in the art can not precisely estimate the corresponding channel characteristic of different time intervals within time slot. It improves receiving performance in high speed moving environment in a wideband CDMA system.

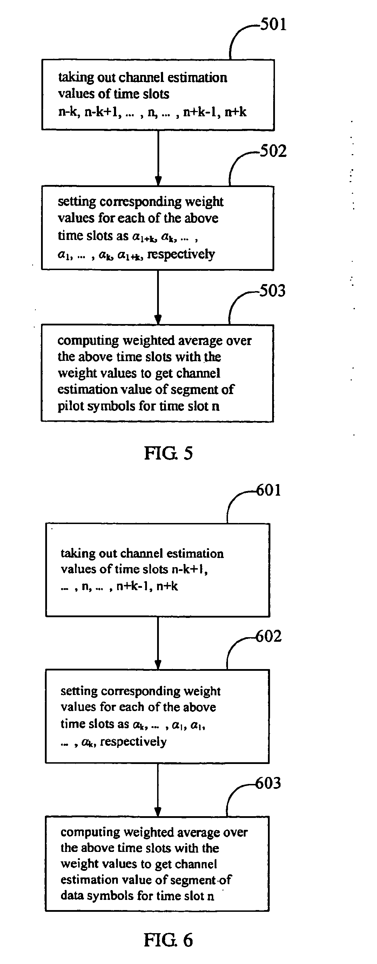

Fig. 5 is the flow diagram of computing channel estimation value of segment of pilot symbols within time slot according to a channel estimation method of the present invention, which includes the details of step 405, starting with step 501 and ending at step 503.

In step 501, it is taken out channel estimation values of time slots n-k, n-k+1, ... , n, ..., n+k-1, n+k (generally, the value of k is taken as 1) obtained in step 404.

In step 502 sequentially, the corresponding weight values are set for said each time slot as $\alpha_{1+k}$, $\alpha_k$,..., $\alpha_1$,..., $\alpha_k$, $\alpha_{1+k}$, respectively.

In step 503 sequentially, a weighted average of the channel estimation values of said time slots is calculated by using corresponding weight values to get channel estimation value of segment of pilot symbols for time slot n.

$$\hat{E}_{n,p} = (\alpha_{1+k}E_{n-k} + \alpha_k E_{n-k+1} + \ldots + \alpha_1 E_n + \ldots \alpha_k E_{n+k-1} + \alpha_{1+k}E_{n+k})/(2\alpha_{1+k} + 2\alpha_k + \ldots + \alpha_1)$$

in which, $\hat{E}_{n,p}$ is a final channel estimate value of a segment of pilot symbols for time slot n, and $E_i$, $\alpha_i$ are a channel estimation value obtained by calculating an arithmetical average within each time slot and a corresponding weight value of each time slot with weighted multi-slot averaging, respectively.

Fig. 6 is a flow diagram of computing channel estimation values of segment of data symbols within time slot according to a channel estimation method of the present invention, which includes the details of step 406, starting with step 601 and ending at step 603.

In step 601, it is taken out channel estimation values of time slots n-k+1 , ..., n, ..., n+k-1, n+k (generally, the value of k is taken as 1) obtained in step 404.

In step 602 sequentially, the corresponding weight values are set for said each time slot as $\alpha_k$,..., $\alpha_1$, $\alpha_1$, ..., $\alpha_k$, respectively.

In step 603 sequentially, the weighted average of the channel estimation values of said time slots is calculated by using corresponding weight values to get channel estimation value of segment of data symbols for time slot n, i.e.

$$\hat{E}_{n,d} = (\alpha_k E_{n-k+1} + \ldots + \alpha_1 E_n + \alpha_1 E_{n+1} + \ldots + \alpha_{1+k}E_{n+k})/(2\alpha_k + \ldots + 2\alpha_1)$$

in which, $\hat{E}_{n,d}$ is a final channel estimation value of a segment of data symbols for time slot n, and $E_i$, $\alpha_i$ are a channel estimation value obtained by calculating an arithmetical average within each time slot and a corresponding weight value of each time slot with weighted multi-slot averaging, respectively.

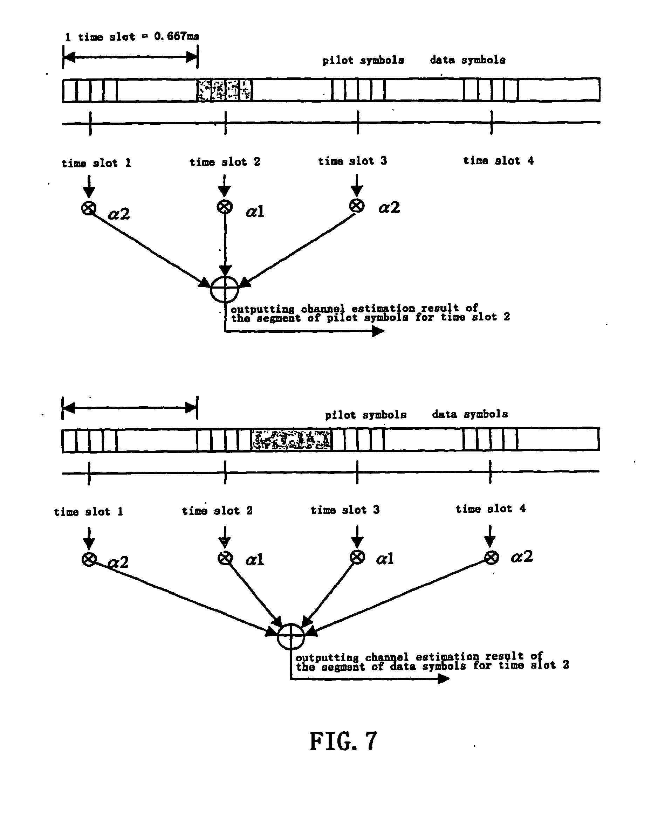

Fig.7 is an embodiment of a channel estimation method according to the present invention. In the embodiment, the channel estimation method of the present invention is used to compute a channel estimation value of time slot 2. The detail process is as follows: first getting channel estimation values for time slots 1, 2, 3 and 4, respectively, by computing an arithmetical average of channel estimation values of each of pilot symbols within the time slot; then computing a weighted average among adjacent time slots 1, 2 and 3 with the corresponding weight value of each time slot as shown in the figure, and getting a final channel estimation value of a segment of pilot symbols within time slot 2, i.e.

$$\hat{E}_{2,p} = (\alpha_2 E_1 + \alpha_1 E_2 + \alpha_2 E_3)/(2\alpha_2 + \alpha_1).$$

A weighting average is computed among adjacent time slots 1, 2, 3 and 4, and a channel estimation value of the data segment within time slot 2 is got, i.e.

$$\hat{E}_{2,d} = (\alpha_2 E_1 + \alpha_1 E_2 + \alpha_1 E_3 + \alpha_2 E_4)/(2\alpha_2 + 2\alpha_1)$$

In the equation, $\hat{E}_{2,p}$, $\hat{E}_{2,d}$ are final channel estimation values for pilot segment and data segment within time slot 2, respectively, and $E_i$, $\alpha_i$ are the channel estimation value obtained by arithmetical averaging within each time slot and the corresponding weight value of each time slot for weighted multi-slot averaging, respectively. It is indicated from an simulation result that, if assuming k=1, $\alpha_1$=1.0, $\alpha_2$ =0.5, the receiving performance of the channel estimation method based estimating on segments is improved to a certain level (increasing about 0.5-0.8 dB) in a low speed moving environment, while the receiving performance is improved significantly (the performance is increased more than 1.8 dB) in a high speed moving environment. Furthermore, the above parameter approached is suitable for implementing in the hardware.

The channel estimation method based on segmenting estimation can accurately obtain channel estimation values of pilot segment and data segment within time slots, and response quickly any change of the channel characteristic of different time intervals within time slot while the channel fading fast, and, therefore, the receiving performance in a communication system is significantly improved in a high speed moving environment.

INDUSTRIAL PRACTICAL APPLICABILITY

It can be seen from the above steps that the method of the present invention can effectively utilize the symmetry principle, and accurately estimate the corresponding channel characteristic of segments of pilot symbols and data symbols within time slot. This method, therefore, really avoid such disadvantages that the corresponding channel characteristic of different time intervals within time slot can not be precisely estimated by the algorithms in the art. The method of the present invention improves significantly the receiving performance in a wideband CDMA system in high speed moving environment.

**Claims**

1.  A method of channel estimation in a wideband CDMA communication system, comprising:

    (1). de-scrambling and de-spreading wideband spread spectrum signals inputted into a RAKE receiver;
    (2). taking out pilot symbols from each of time slots of a dedicated physical control channel according to a predetermined time slot format;
    (3). getting a channel estimation value of each of the pilot symbols by correlating each of the pilot symbol taken out with a known pilot symbol;
    (4). getting a channel estimation value of each time slot by computing arithmetical average of the channel estimation values of all of the pilot symbols within each of the time slot;
    (5). getting a channel estimation value corresponding to a segment of the pilot symbols for a current time slot by computing a weighted average of the channel estimation values for a plurality of the time slots before and after the current time slot;
    (6). getting a channel estimation value corresponding to a segment of the data symbols for the current time slot by computing a weighted average of the channel estimation values for a plurality of time slots before and after the current time slot; and
    (7). compensating a dedicated physical data channel of the current time slot with the channel estimation values of segments of the pilot symbols and the data symbols, and outputting a compensated result;
    the step (5) further comprises the following steps:

    taking out channel estimation values of time slots n-k, n-k+1, ..., n, ..., n+k-1, n+k obtained in step (4);
    setting corresponding weight values of each of the time slots as $\alpha_{1+k}$, $\alpha_k$,..., $\alpha_1$,..., $\alpha_k$, $\alpha_{1+k}$, respectively; and
    calculating a weighted average of the channel estimation values of said time slots by using corresponding weight values to get channel estimation value of segment of pilot symbols for time slot n:

$$\hat{E}_{n,p} = (\alpha_{1+k} E_{n-k} + \alpha_k E_{n-k+1} + \ldots + \alpha_1 E_n + \ldots \alpha_k E_{n+k-1} + \alpha_{1+k} E_{n+k})/(2\alpha_{1+k} + 2\alpha_k + \ldots + \alpha_1);$$

**characterized in that**:

the step (6) further comprises the following steps:
taking out channel estimation values of time slots n-k+1, ... , n, n+1, ..., n+k obtained in step (4);
setting corresponding weight values for each of the time slots as $\alpha_k, ..., \alpha_1, \alpha_1, ..., \alpha_k$, respectively; and calculating a weighted average of the channel estimation values of said time slots by using corresponding weight values to get channel estimation value of segment of data symbols for time slot n:

$$\hat{E}_{n,d} = (\alpha_k E_{n-k+1} + \ldots + \alpha_1 E_n + \alpha_1 E_{n+1} + \ldots + \alpha_{1+k} E_{n+k})/(2\alpha_k + \ldots + 2\alpha_1).$$

2. A method of channel estimation in a wideband CDMA communication system according to claim 1, wherein the value of k is taken as 1.

3. A method of channel estimation in a wideband CDMA communication system according to claim 1, wherein in step (7) the dedicated physical data channel of the current time slot is compensated in such way that compensating data in the dedicated physical data channel at the time corresponding to the segment of the pilot symbols with the channel estimation value of the segment of the pilot symbols for the current time slot, and compensating data in the dedicated physical data channel at the time corresponding to the segment of the data symbols with the channel estimation value of the segment of the data symbols for the current time slot.

4. A system comprising means to implement a method as claimed in any preceding claim.

**Patentansprüche**

1. Verfahren zur Kanalschätzung in einem Breitband-CDMA-Kommunikationssystem, wobei das Verfahren folgendes umfasst:

(1) das Descrambeln und Entspreizen von Breitband-Spread-Spectrum-Signalen, die in einen RAKE-Empfänger eingegeben werden;
(2) das Entnehmen von Pilotsymbolen aus allen Zeitschlitzen eines Dedicated Physical Control Channels gemäß einem vorbestimmten Zeitschlitzformat;
(3) das Ermitteln eines Kanalschätzwertes jedes der Pilotsymbole durch Korrelation jedes entnommenen Pilotsymbols mit einem bekannten Pilotsymbol;
(4) das Ermitteln eines Kanalschätzwertes jedes Zeitschlitzes durch Berechnen des arithmetischen Mittelwertes der Kanalschätzwerte aller Pilotsymbole in jedem der Zeitschlitze;
(5) das Ermitteln eines Kanalschätzwertes, der einem Segment der Pilotsymbole für einen aktuellen Zeitschlitz entspricht, indem ein gewichteter Mittelwert der Kanalschätzwerte für eine Mehrzahl der Zeitschlitze vor und nach dem aktuellen Zeitschlitz berechnet wird;
(6) das Ermitteln eines Kanalschätzwertes, der einem Segment der Datensymbole für den aktuellen Zeitschlitz entspricht, indem ein gewichteter Mittelwert der Kanalschätzwerte für eine Mehrzahl von zeitschlitzen vor und nach dem aktuellen Zeitschlitz berechnet wird; und
(7) das Kompensieren eines Dedicated Physical Data Channels des aktuellen Zeitschlitzes mit den Kanalschätzwerten von Segmenten der Pilotsymbole und der Datensymbole und das Ausgeben eines kompensierten Ergebnisses;
wobei der Schritt (5) ferner die folgenden Schritte umfasst:

das Entnehmen von Kanalschätzwerten der Zeitschlitze n-k, n-k+1, ..., n, ..., n+k-1, n+k, die in Schritt (4) erhalten werden;
das Festsetzen entsprechender Gewichtungswerte jedes der Zeitschlitze entsprechend auf $\alpha_{1+k}$, $\alpha_k$, ..., $\alpha_1$, ..., $\alpha_k$, $\alpha_{1+k}$; und
das Berechnen eines gewichteten Mittelwertes der Kanalschätzwerte der genannten Zeitschlitze unter Verwendung entsprechender Gewichtungswerte zum Erhalten des Kanalschätzwertes eines Segments von Pilotsymbolen für den Zeitschlitz n:

$$\hat{E}_{n,p} = (\alpha_{1+k}E_{n-k} + \alpha_k E_{n-k+1} + \ldots + \alpha_1 E_n + \alpha_k E_{n+k-1} + \alpha_{1+k}E_{n+k})/(2\alpha_{1+k} + 2\alpha_k + \ldots + \alpha_1);$$

**dadurch gekennzeichnet, dass**:

der Schritt (6) ferner die folgenden Schritte umfasst:

das Entnehmen von Kanalschätzwerten der Zeitschlitze n-k+1, ..., n, n+1, ..., n+k, die in Schritt (4) erhalten werden;

das Festsetzen entsprechender Gewichtungswerte jedes der Zeitschlitze entsprechend auf $\alpha_k$, ..., $\alpha_1$, $\alpha_1$,..., $\alpha_{k;}$; und

das Berechnen eines gewichteten Mittelwertes der Kanalschätzwerte der genannten Zeitschlitze unter Verwendung entsprechender Gewichtungswerte zum Erhalten des Kanalschätzwertes eines Segments von Datensymbolen für den Zeitschlitz n:

$$\hat{E}_{n,d} = (\alpha_k E_{n-k+1} + \ldots + \alpha_1 E_n + \alpha_1 E_{n+1} + \ldots + \alpha_{1+k}E_{n+k})/(2\alpha_k + \ldots + 2\alpha_1).$$

2. Verfahren zur Kanalschätzung in einem Breitband-CDMA-Kommunikationssystem nach Anspruch 1, wobei als Wert von k 1 verwendet wird.

3. Verfahren zur Kanalschätzung in einem Breitband-CDMA-Kommunikationssystem nach Anspruch 1, wobei in Schritt (7) der Dedicated Physical Data Channel des aktuellen Zeitschlitzes so kompensiert wird, dass die Daten in dem Dedicated Physical Data Channel zu der Zeit, welche dem Segment der Pilotsymbole entspricht, mit dem Kanalschätzwert des Segments der Pilotsymbole für den aktuellen Zeitschlitz kompensiert werden, und wobei die Daten in dem Dedicated Physical Data Channel zu der Zeit, die dem Segment der Datensymbole entspricht, mit dem Kanalschätzwert des Segments der Datensymbole für den aktuellen Zeitschlitz kompensiert werden.

4. System, das eine Einrichtung zum Implementieren eines Verfahrens nach einem der vorstehenden Ansprüche umfasst.

**Revendications**

1. Procédé d'estimation de canal dans un système de communication AMCR à large bande, comprenant les étapes consistant à :

(1) desembrouiller et désétaler des signaux à spectre étalé à large bande entrés dans un récepteur RAKE ;

(2) extraire des symboles pilotes de chacun des intervalles de temps d'un canal de commande physique dédié selon un format d'intervalle de temps prédéterminé ;

(3) obtenir une valeur d'estimation de canal de chacun des symboles pilotes en corrélant chacun des symboles pilotes extraits avec un symbole pilote connu ;

(4) obtenir une valeur d'estimation de canal de chaque intervalle de temps en calculant la moyenne arithmétique des valeurs d'estimation de canal de tous les symboles pilotes dans chaque intervalle de temps ;

(5) obtenir une valeur d'estimation de canal correspondant à un segment des symboles pilotes pour un intervalle de temps actuel en calculant une moyenne pondérée des valeurs d'estimation de canal pour une pluralité des intervalles de temps avant et après l'intervalle de temps actuel ;

(6) obtenir une valeur d'estimation de canal correspondant à un segment des symboles de données pour l'intervalle de temps actuel en calculant une moyenne pondérée des valeurs d'estimation de canal pour une pluralité d'intervalles de temps avant et après l'intervalle de temps actuel ; et

(7) compenser un canal de données physique dédié de l'intervalle de temps actuel avec les valeurs d'estimation de canal de segments des symboles pilotes et des symboles de données, et sortir un résultat compensé ;

l'étape (5) comprend en outre les étapes consistant à :

extraire des valeurs d'estimation de canal d'intervalles de temps nk, n-k +1, ..., n, ..., n + k-1, n + k obtenues à l'étape (4) ;
fixer des valeurs de poids de chacun des intervalles de temps comme $\alpha_{1+k}$, $\alpha_k$, ..., $\alpha_k$, $\alpha_{1+k}$, respectivement ;
et
calculer une moyenne pondérée des valeurs d'estimation de canal desdits intervalles de temps en utilisant des valeurs de poids correspondantes pour obtenir une valeur d'estimation de canal de segment de symboles pilotes pour l'intervalle de temps n :

$$\hat{E}_{n,p} = (\alpha_{1+k}E_{n-k}+\alpha_k E_{n-k+1}+\ldots+\alpha_1 E_n+\ldots\alpha_k E_{n+k-1}+\alpha_{1+k}E_{n+k})/(2\alpha_{1+k}+2\alpha_k+\ldots+\alpha_1) \; ;$$

**caractérisé en ce que** :

l'étape (6) comprend en outre les étapes consistant à :
extraire des valeurs d'estimation de canal d'intervalles de temps n-k+1, ..., n, n+1, ..., n+k obtenues à l'étape (4) ;
fixer les valeurs de poids correspondantes pour chacun des intervalles de temps comme $\alpha_k$, ..., $\alpha_1$, $\alpha_1$, ..., $\alpha_k$, respectivement ; et
calculer une moyenne pondérée des valeurs d'estimation de canal desdits intervalles de temps en utilisant des valeurs de poids correspondantes pour obtenir une valeur d'estimation de canal de segment de symboles de données pour l'intervalle de temps n :

$$\hat{E}_{n,d} = (\alpha_k E_{n-k+1}+\ldots+\alpha_1 E_n+\alpha_1 E_{n+1}+\ldots+\alpha_{1+k}E_{n+k})/(2\alpha_k+\ldots+2\alpha_1).$$

2. Procédé d'estimation de canal dans un système de communication AMCR à large bande selon la revendication 1, dans lequel la valeur de k est prise comme 1.

3. Procédé d'estimation de canal dans un système de communication AMCR à large bande selon la revendication 1, dans lequel à l'étape (7), le canal de données physique dédié de l'intervalle de temps actuel est compensé de façon à compenser les données dans le canal de données physique dédié au moment correspondant au segment des symboles pilotes avec la valeur d'estimation de canal du segment des symboles pilotes pour l'intervalle de temps actuel, et à compenser les données dans le canal de données physique dédié au moment correspondant au segment des symboles de données avec la valeur d'estimation de canal du segment des symboles de données pour l'intervalle de temps actuel.

4. Système comprenant des moyens pour mettre en oeuvre un procédé selon l'une quelconque des revendications précédentes.

DPDCH | data field

total 2560 chips, 10*2$^k$ bits(k=0～6)

DPCCH | pilot field | data field

total 2560 chips, 10 bits

| time slot #0 | time slot #1 | | time slot #i | | time slot #14 |

1 wireless data frame= 10ms

## FIG. 1

1 time slot = 0.667ms

pilot symbols    data symbols

time slot 1    time slot 2    time slot 3    time slot 4

⊗ $\alpha2$    ⊗ $\alpha1$    ⊗ $\alpha1$    ⊗ $\alpha2$

outputting channel estimation result for time slot 2

## FIG. 2

FIG. 3

```
                                                    401

      de-scrambling and de-spreading
      signals inputted into
      a RAKE receiver


                                                    402

      taking out pilot symbols from
      each time slot of DPCCH


                                                    403

      channel estimation value for
      each pilot symbol
      are calculated


                                                    404

      computing arithmetical average
      over channel estimation values
      of pilot symbols within time
      slot to get channel estimation
      value for each of time slots


                                                    405

      computing weighting average over
      channel estimation values for a
      plurality of time slots to get a
      channel estimation value of a
      segment of pilot symbols for the
      current time slot


                                                    406

      computing weighting average over
      channel estimation values for a
      plurality of time slots to get a
      channel estimation value of a
      segment of data symbols for the
      current time slot


                                                    407

      compensating the dedicated data
      channel with the segments of
      pilot symbols and data symbols
      and outputting the compensated
      result to make maximum ratio
      combining.
```

FIG. 4

501

taking out channel estimation
values of time slots
n-k, n-k+1, ... , n, ... , n+k-1, n+k

502

setting corresponding weight
values for each of the above
time slots as $a_{1+k}$, $a_k$, ... ,
$a_1$, ... , $a_k$, $a_{1+k}$, respectively

503

computing weighted average over
the above time slots with the
weight values to get channel
estimation value of segment of
pilot symbols for time slot n

FIG. 5

601

taking out channel estimation
values of time slots n-k+1,
... , n, ... , n+k-1, n+k

602

setting corresponding weight
values for each of the above
time slots as $a_k$, ... , $a_1$, $a_1$,
... , $a_k$, respectively

603

computing weighted average over
the above time slots with the
weight values to get channel
estimation value of segment of
data symbols for time slot n

FIG. 6

1 time slot = 0.667ms

pilot symbols    data symbols

time slot 1    time slot 2    time slot 3    time slot 4

$\alpha 2$    $\alpha 1$    $\alpha 2$

outputting channel estimation result of
the segment of pilot symbols for time slot 2

pilot symbols    data symbols

time slot 1    time slot 2    time slot 3    time slot 4

$\alpha 2$    $\alpha 1$    $\alpha 1$    $\alpha 2$

outputting channel estimation result of
the segment of data symbols for time slot 2

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1089451 A